# EUROPÄISCHE PATENTSCHRIFT

(11) **EP 0 836 905 B1**
(45) Veröffentlichungstag und Bekanntmachung des Hinweises auf die Patenterteilung: **10.04.2002**
(21) Anmeldenummer: 96116850.7
(22) Anmeldetag: 20.10.1996
(51) Int. Cl.: B23K 26/00, C21D 1/09, B23K 26/02, B23K 26/06

(54) **Verfahren und Anordnung zur temperaturgeregelten Oberflächenbehandlung, insbesondere zum Härten von Werkstückoberflächen mittels Laserstrahlung**
Method and arrangement for surface treatment with temperature control, particularly for superficial hardening with laser radiation
Procédé et dispositif pour traitement de surface avec contrôle de la température, en particulier pour le durcissement superficiel de pièces au moyen d'un rayonnement laser

(43) Veröffentlichungstag der Anmeldung: 22.04.1998
(73) Patentinhaber: INPRO Innovationsgesellschaft für fortgeschrittene Produktionssysteme in der Fahrzeugindustrie mbH, 10587 Berlin (DE)
(72) Erfinder: Dommaschk, Ralf c/o INPRO.. Gmbh, D-10587 Berlin (DE); Elsner, Christian c/o INPRO .. Gmbh, D-10587 Berlin (DE)
(74) Vertreter: Hoffmann, Klaus-Dieter, Dipl.-Ing.

(56) Entgegenhaltungen:
- EP-A- 0 309 973
- EP-A- 0 562 492
- WO-A-94/17575
- DE-A- 4 316 829
- GB-A- 2 196 155
- US-A- 4 826 269
- LASER PRAXIS, Juni 1995, MUENCHEN DE, Seiten LS10-LS12, XP000554790 PETER LOOSEN ET AL.: "Möglichkeiten der Hochleistungsdiodenlaser"

## Beschreibung

Die Erfindung betrifft ein Verfahren zur temperaturgeregelten Oberflächenbehandlung, insbesondere Härten von Werkstückoberflächen mittels Laserstrahlung, gemäß dem Oberbegriff des Patentanspruchs 1 wie auch des Patentanspruchs 2.

Die Erfindung betrifft ferner eine Anordnung zur temperaturgeregelten Oberflächenbehandlung, insbesondere zum Härten von Werkstückoberflächen mittels Laserstrahlung gemäß dem Oberbegriff des Patentanspruchs 3 wie auch des Patentanspruchs 4.

Zur Behandlung metallischer Werkstückoberflächen werden neben den klassischen Härte- und Umschmelztechniken zunehmend verschiedene Laserverfahren eingesetzt, wobei hauptsächlich CO₂ - Laser Verwendung finden. Um ein Einkoppeln der Strahlung eines CO₂ - Lasers in das Material des Bauteils zu ermöglichen, müssen jedoch absorptionsfördernde Schichten, wie z.B. Graphit in definierter Menge auf das Bauteil aufgetragen werden. Für kürzere Wellenlängen, wie z.B. die des Nd:YAG - Lasers kann auf eine Beschichtung verzichtet werden.

Es ist bekannt, Laserdioden mit hohen Ausgangsleistungen, die zum Pumpen von Festkörperlasern eingesetzt werden, um Pumplampen zu ersetzen und die Lebensdauer der Festkörperlaser zu erhöhen, in Form von Diodenbarren und Diodenstacks mit mehreren hundert Watt Ausgangsleistung miteinander zu kombinieren. So ist durch das Stapeln von zehn Barren mit jeweils 40 Watt Ausgangsleistung bereits eine Gesamtleistung von 400 Watt auf sehr kleinem Raum, z.B. bei nur 4 x 4 x 10 Zentimeter Größe erreicht worden ("Der Fraunhofer", 2/ 1955, Seiten 11 bis 15).

Aus der DE-A- 43 16 829 sind Verfahren und Anordnungen zur temperaturgeregelten Oberflächenbehandlung mittels Laserdiodenstrahlung gemäß der eingangs erwähnten Art bekannt, bei denen zwecks Anpassung des Strahlprofils an den Bearbeitungsprozeß die von einer Vielzahl der Dioden emittierte Strahlung mit einem vorbestimmten Strahlprofil wie punktförmige Laserfoki auf den Bearbeitungsbereich des Werkstücks gerichtet wird und eine Veränderung der Intensitätsverteilung im Strahlprofil durch Steuerung der Diodenausgangsleistung erfolgt. Hierbei werden den Modulen jeweils in Richtung der Laserstrahlung Kollimatorlinsen in Kombination mit einer Fokusiereinheit nachgeordnet, und die vom Werkstück emittierte Strahlung wird über einen teilweisen separaten Weg zu der Detektoreinheit geführt.

Um eine ausreichend große Werkstückoberfläche bearbeiten zu können, ist ein System zur Strahlumformung erforderlich, mit dem aus dem punktförmigen Laserfokus im Auftreffpunkt eine Linie mit geeigneter Intensitätsveretilung der Laserstrahlung erzeugt werden kann. Verwendet werden entweder spezielle Optiken, wie z.B. Facettenspiegel für CO₂ - Laser oder ein Ablenkeinrichtung, die den Laserstrahl quer zur Vorschubrichtung bewegt, wie z.B. ein Galvanometerscanner.

Zur Überwachung der Oberflächentemperatur werden bekannterweise Pyrometer oder infrarotempfindliche Dioden eingesetzt. Entsprechend den Temperaturprofil wird die Intensitätsverteilung der Laserstrahlung dann geregelt.

Der Erfindung liegt die Aufgabe zugrunde, ein Verfahren und eine Anordnung zur temperaturgeregelten Oberflächenbehandlung, insbesondere zum Härten von Werkstückoberflächen, gemäß der eingangs erwähnten Art zur Verfügung zu stellen, mit dem bzw. der der Laserstrahlung ein geeigneter Querschnitt gegeben und die Temperaturverteilung zugleich in einer raumsparenden Weise gemessen werden kann.

Diese Aufgabe wird mit einem Verfahren zur temeperaturgeregelten Oberflächenbehandlung gemäß dem Oberbegriff des Patentanspruchs 1 wie auch des Patentanspruchs 2 erfindungsgemäß durch die Kennzeichnungsmerkmale des Patentanspruchs 1 bzw. 2 gelöst.

Diese Aufgabe wird auch durch eine Anordnung zur temperaturgeregelten Oberflächenbehandlung gemäß dem Oberbegriff des Patentanspruchs 3 wie auch des Patentanspruchs 4 durch die Kennzeichnungsmerkmale des Patentanspruchs 3 bzw. 4 gelöst.

Durch das Vorsehen der Detektorzeile an einem in bezug auf die Werkstückoberfläche senkrecht angeordneten Modul ist die Messung der Temperaturverteilung in besonders raumsparender Weise möglich. Die Abbildung der Stacks als Linienfoki sorgt für einen geeigneten Laserstrahlungsquerschnitt.

Die Detektorzeile der erfindungsgemäßen Anordnung kann bevorzugt Silizium-Detektoren aufweisen, und vorzugsweise sind fünf Module mit je 250 W Einzelleistung vorgesehen, die durch Strahlenaddition im Fokus eine Gesamtleistung von 1250 W ergeben. Der Bauraum der erfindungsgemäßen Anordnung beträgt vorzugsweise ca. 100 x 100 x 150 mm (Breite x Höhe x Tiefe), und das Gewicht ohne Netzversorgung ist im günstigsten Fall etwa 2 kg, so daß sich für den Bauraum vom Gewicht her die unmittelbare Montage an einen Roboter anbietet.

Die Erfindung ermöglicht den direkten Einsatz von Hochleistungs-Diodenlasern zur temperaturgeregelten Oberflächenbehandlung, insbesondere zum Härten von Werkstückoberflächen und bietet gegenüber CO₂ - und Nd : YAG - Lasern folgende Vorteile:
- direkte Umsetzung von elektrischer Leistung in Laserleistung bei höherem Wirkungsgrad,
- die Laserleistung läßt sich durch die Stromstärke an der einzelnen Laserdiode regeln,
- der Platzbedarf eines derartigen Aufbaus ist wesentlich geringer,
- die kürzere Wellenlänge von z.B. 800 mm begünstigt die Einkopplung bei vielen Materialien,
- wesentlich geringerer Aufwand für Kühlung und Stromversorgung der Dioden-Module,
- direkte Montagemöglichkeit des Aufbaus z.B. an einen Roboter.

Die Erfindung wird nun anhand der Zeichnungen erläutert. In diesen sind:
**Fig. 1** eine Frontansicht eines Lasermoduls mit 250 W in Originalgröße,
**Fig. 2** ein Diagramm, das die Einzelleistung der Laserdioden eines Diodenbarrens und die Gesamtleistung des letzteren zeigt,
**Fig. 3** ein Diagramm, das die Einzelleistung der Diodenbarren eines Diodenstacks und die Gesamtleistung des letzteren zeigt,
**Fig. 4** eine Draufsicht auf ein Modul aus gestapelten Diodenbarren mit zugeordneter Fokussierund Beobachtungsoptik, wobei der Strahlengang verdeutlicht ist,
**Fig. 5** eine schematische Darstellung einer aus fünf Modulen mit jeweils zugeordneter Fokussier- und Beobachtungsoptik bestehende Ausführungsform der erfindungsgemäßen Anordnung, wobei die Überlagerung der einzelnen Liniefoki auf ein Werkstück unter Bildung einer Härtespur gezeigt ist,
Fig. 6 ein Diagramm, das die Einzelleistung der Module der Anordnung gemäß Fig. 5 und die Gesamtleistung des letzteren für den Fall zeigt, daß die Diodenstacks der Module als ein Linienfokus auf der Werkstückoberfläche abgebildet werden;
Fig. 7 eine Darstellung der von den fünf Modulen der Anordnung nach Fig. 5 erzeugten Linienfoki auf der Werkstückoberfläche; und
Fig. 8 ein Diagramm, das die Einzelleistung der fünf Module der Anordnung gemäß Fig. 5 und die Gesamtleistung letzterer für den Fall zeigt, daß die Diodenstacks der Module als Linienfoki gemäß Fig. 7 nebeneinander und/oder überlappend abgebildet werden.

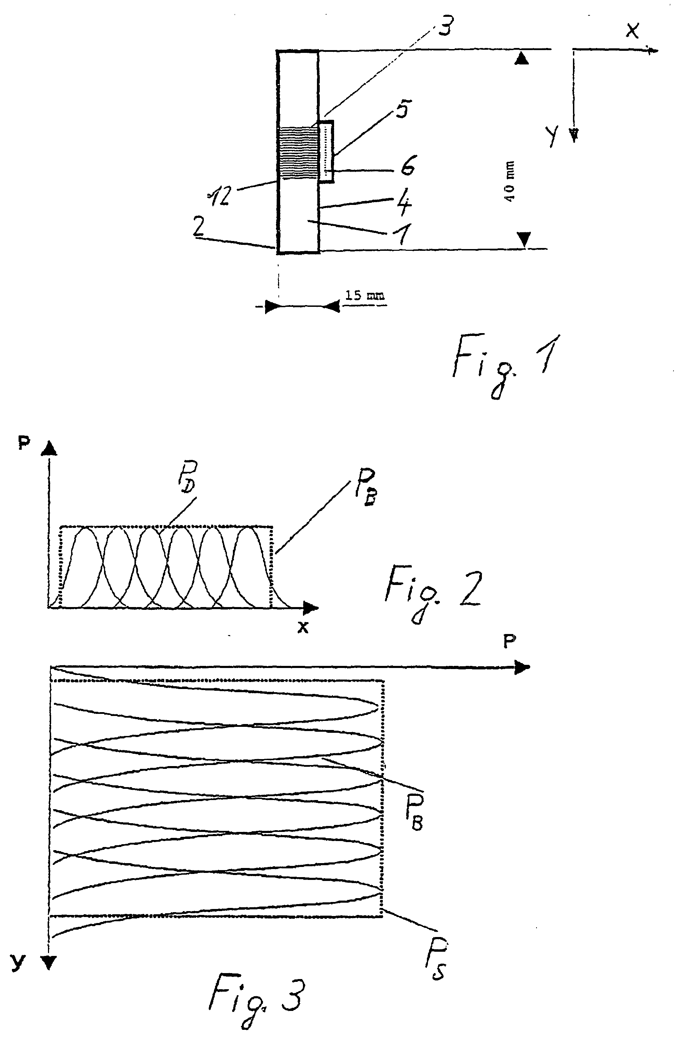

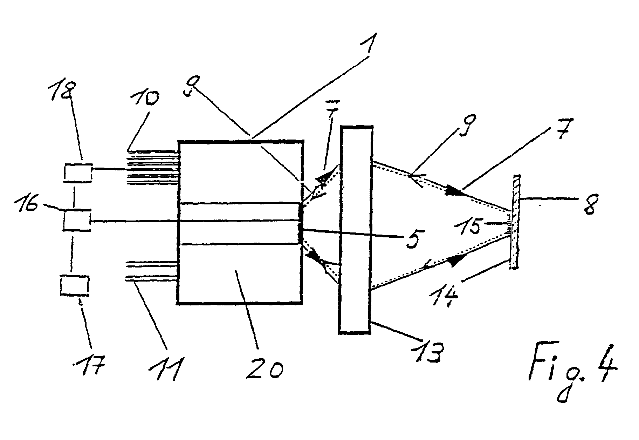

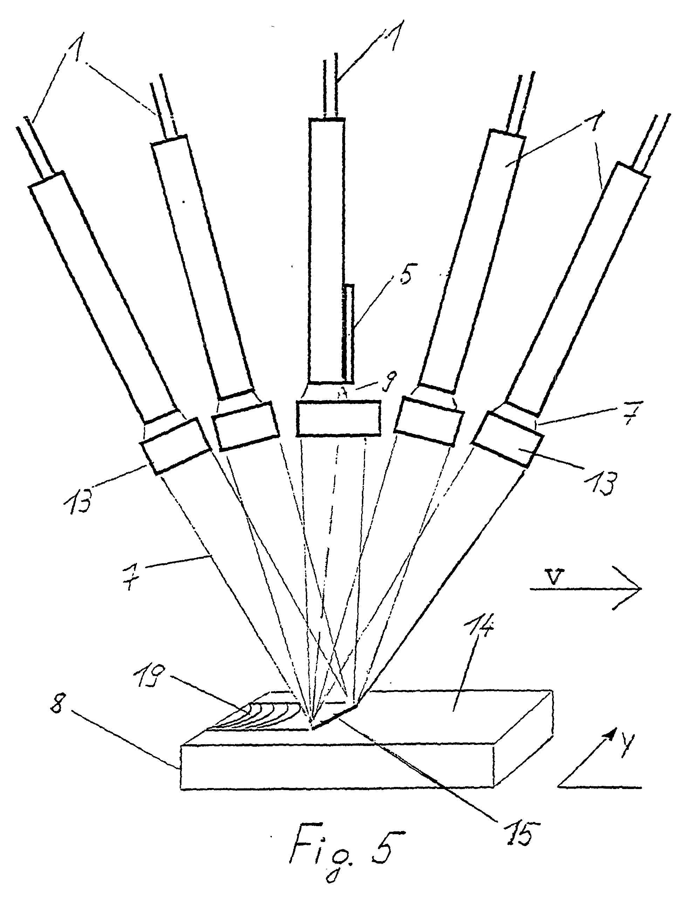

Wie aus Fig. 1 hervorgeht, die in Frontansicht ein Lasermodul 1 mit 250 W Leistung in Originalgröße zeigt, sind in einem Gehäuse 2 einer Länge von 40 mm und einer Breite von 15 mm Diodenbarren 3 einer Fläche von ca. 1 x 1 cm übereinandergestapelt, wobei an einer Längsseite 4 des Gehäuses 2 eine Detektorzeile 5 vorgesehen ist, die infrarotempfindliche Dioden 6 aufweist.

Wie aus dem Diagramm nach Fig. 2 hervorgeht, werden die Leistungen P_{D} der einzelnen Laserdioden 12 eines Diodenbarrens 3 zu dessen Gesamtleistung P_{B} gebündelt, und ebenso bündeln sich die Leistung P_{B} der einzelnen Diodenbarren 3 eines Diodenstacks 20 zu dessen Gesamtleistung P_{S}, wie Fig. 3 zeigt.

Fig. 4 verdeutlicht den Strahlengang, ausgehend vom Modul 1 als Laserstrahlung 7 und rückkehrend zur Detektorzeile 5 des Modus 1 als vom Werkstück 8 abgestrahlte Wärmestrahlung 9. Das Modul 1 besteht hier aus gestapelten Diodenbarren 3 mit Mikrokanalkühlelementen, wobei 20 Diodenbarren 3 à 12 W eine Gesamtleistung von 240 W erbringen können. An der Rückseite des Gehäuses 2 des Moduls 1 sind die elektrische Versorgung 10 und die Kühlanschlüsse 11 der Laserdioden 12 vorgesehen. Dem Modul 1 ist in Strahlungsrichtung der von den Diodenbarren 3 ausgehenden Laserstrahlung 7 eine zugleich auch als Beobachtungsoptik dienende Fokussieroptik 13 derart nachgeordnet, daß der Bearbeitungsstrahl die Diodenbarren 3 auf der zu bearbeitenden Werkstückoberfläche 14 als Linienfokus 15 abgebildet wird und die von letzterem ausgehende Wärmestrahlung 9 mittels der Beobachtungsoptik 13 auf die infrarotempfindlichen Dioden 6 der Detektorzeile 5 führbar ist. Über einen mit letzterer verbundenen Komparator 16, dem ein Soll-Temperaturprofil 17 zugeführt wird, und über einen mit diesem und der elektrischen Versorgung 10 der Laserdioden 12 bzw. Diodenbarren 3 verbundenen Regler 18 ist die Anpassung der Intensitätsverteilung der Laserstrahlung auf der Werkstückoberfläche 14 aufgrund der fortlaufenden unmittelbaren Erfassung der Temperaturverteilung auf der Werkstückoberfläche entsprechend dem gewünschten Temperaturprofil möglich, wobei einzelne Laserdioden 12 und/oder Diodenbarren 3 zu- oder abgeschaltet und/oder geregelt werden können.

Fig. 5 zeigt eine bevorzugte Ausführungsform der erfindungsgemäßen Anordnung, die fünf Lasermodule 1 aufweist, denen jeweils in Strahlungsrichtung eine Fokussier- und Beobachtungsoptik 13 nachgeschaltet ist und die so zueinander angeordnet und ausgerichtet sind, daß der auf der Oberfläche 14 eines relativ zu der Anordnung mit einer Geschwindigkeit v bewegbaren Werkstücks 21 eine Härtespur 19 erzeugt wird, wobei eine Leistungsaddition durch Überlagerung mehrerer Foki der Stacks 20 der Module 1 erfolgt. Hierbei sind zwei Varianten der Leistungsaddition möglich. Zum einen können die Diodenstacks 20 als ein Linienfokus durch Überlagerung der Foki auf der Werkstückoberfläche 14 abgebildet werden (Variante A), wobei, wie aus Fig. 6 hervorgeht, die Leistungsverteilung beim Abschalten einzelner Diodenstacks 20 der jeweiligen Module 1 erhalten bleibt und lediglich die Gesamtleistung der Anordnung sinkt. Eine Veränderung der Leistungsverteilung ist durch Regelung einzelner Diodenbarren 3 möglich. Die fortlaufende Erfassung der Oberflächentemperatur und die Anpassung der Intensitätsverteilung der Laserstrahlung an das gewünschte Temperaturprofil erfolgen so, wie zuvor in bezug auf Fig. 4 beschrieben ist.

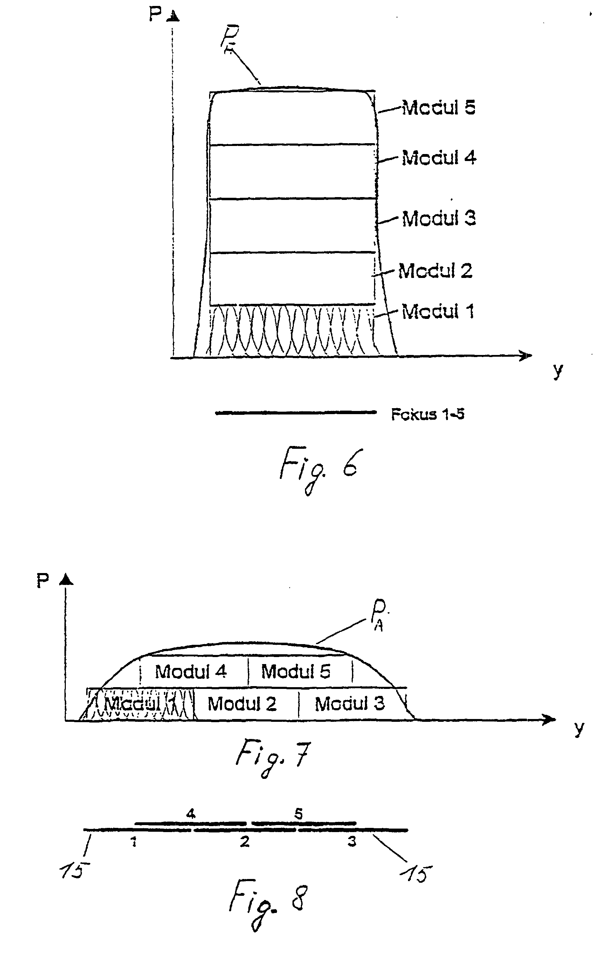

Zum anderen kann, wie aus den Fig. 7 und 8 hervorgeht, die Leistungsaddition durch Überlagerung mehrerer Foki mittels der erfindungsgemäßen Anordnung nach Fig. 5 so erfolgen, daß die Diodenstacks 20 der fünf Module 1 der Anordnung als Linienfoki nebeneinander und überlappend angeordnet werden (Fig. 7) und die Leistungsverteilung sich beim Ab- oder Zuschalten bzw. Regeln einzelner Diodenbarren 3 oder Diodenstacks 20 ändert (Fig. 8) (Variante B).

### Liste der Bezugszeichen

- 1: Lasermodul 1
- 2: Gehäuse des Moduls
- 3: Diodenbarren
- 4: Längsseite des Gehäuses
- 5: Detektorzeile
- 6: infrarotempfindliche Diode
- 7: Laserstrahlung
- 8: Werkstück
- 9: Wärmestrahlung
- 10: elektrische Versorgung
- 11: Kühlanschlüsse
- 12: Laserdioden
- 13: Fokussier- und Beobachtungsoptik
- 14: Werkstückoberfläche
- 15: Linienfokus
- 16: Komparator
- 17: Soll-Temperaturprofil
- 18: Regler
- 19: Härtespur
- 20: Diodenstacks

## Patentansprüche

1. Verfahren zur temperaturgeregelten Oberflächenbehandlung, insbesondere Härten von Werkstückoberflächen mittels Laserstrahlung, die von Laserdioden erzeugt wird, die zu Barren nebeneinander angeordnet werden, die wiederum zu eine Vielzahl Module bildenden Stacks übereinander gestapelt werden, wobei die von den Diodenlasern erzeugte Laserstrahlung mittels einer Fokussieroptik, die dem Modul in Richtung der Laserstrahlung nachgeordnet wird, auf die Werkstückoberfläche fokussiert, die Temperatur auf der Werkstückoberfläche mittels infrarotempfindlicher Dioden überwacht und die Intensitätsverteilung der Laserstrahlung auf der Werkstückoberfläche einem gewünschten Temperaturprofil angepaßt wird, wobei eine Leistungsaddition durch Überlagerung einzelner Foki der Diodenstacks auf der Werkstückoberfläche vorgenommen wird, indem die Diodenstacks als ein Fokus auf der Werkstückoberfläche abgebildet werden, und wobei die Leistungsverteilung beim Ab- oder Zuschalten einzelner Diodenstacks erhalten bleibt und lediglich die Gesamtleistung sinkt bzw. steigt, gleichzeitig die Wärmestrahlung der Werkstückoberfläche über die Fokussieroptik den infrarotempfindlichen Dioden zur fortlaufenden Erfassung der Temperaturverteilung auf der Werkstückoberfläche zugeführt wird, und die Anpassung der Intensitätsverteilung der Laserstrahlung auf der Werkstückoberfläche an das gewünschte Temperaturprofil durch Regeln und/oder Ab- bzw. Zuschalten einzelner Laserdioden und/oder Diodenbarren erfolgt,
**dadurch gekennzeichnet,**
**daß** die Stacks als Linienfoki abgebildet werden und daß an einem in bezug auf die Werkstückoberfläche senkrecht angeordneten Modul eine Detektorzeile derart vorgesehen wird, daß die von der Werkstückoberfläche ausgehende Wärmestrahlung über die dem Modul vorgeschaltete Fokussieroptik auf die Detektorzeile gefuhrt wird.

2. Verfahren zur temperaturgeregelten Oberflächenbehandlung, insbesondere Härten von Werkstückoberflächen mittels Laserstrahlung, die von Laserdioden erzeugt wird, die zu Barren nebeneinander angeordnet werden, die wiederum zu eine Vielzahl Module bildenden Stacks übereinandergestapelt werden, wobei die von den Diodenlasern erzeugte Laserstrahlung mittels einer Fokussieroptik, die dem Modul in Richtung der Laserstrahlung nachgeordnet wird, auf die Werkstückoberfläche fokussiert, die Temperatur auf der Werkstückoberfläche mittels infrarotempfindlicher Dioden überwacht und die Intensitätsverteilung der Laserstrahlung auf der Werkstückoberfläche einem gewünchten Temperaturprofil angepaßt wird, wobei eine Leistungsaddition durch Kombinieren einzelner Foki der Diodenstacks auf der Werkstückoberfläche vorgenommen wird, indem die Diodenstacks als nebeneinanderliegende und/oder sich überlappende Foki auf der Werkstückoberfläche abgebildet werden, gleichzeitig die Wärmestrahlung der Werkstückoberfläche über die Fokussieroptik den infrarotempfindlichen Dioden zur fortlaufenden Erfassung der Temperaturverteilung auf der Werkstückoberfläche zugeführt wird, und die Anpassung der Intensitätsverteilung der Laserstrahlung auf der Werkstückoberfläche an das gewünschte Temperaturprofil durch Regeln und/oder Ab- bzw. Zuschalten einzelner Diodenbarren und/oder Diodenstacks erfolgt,
**dadurch gekennzeichnet,**
**daß** die Diodenstacks als Linienfoki abgebildet werden, die in einer Reihe angeordnet sind, und daß an einem in bezug auf die Werkstückoberfläche senkrecht angeordneten Modul eine Detektorzeile derart vorgesehen wird, daß die von der Werkstückoberfläche ausgehende Wärmestrahlung über die dem Modul vorgeschaltete Fokussieroptik auf die Detektorzeile geführt wird

3. Anordnung zur temperaturgeregelten Oberflächenbehandlung, insbesondere zum Härten von Werkstückoberflächen mittels Laserstrahlung, mit Modulen (1) aus zu Stacks (20) gestapelten Laserdiodenbarren (3) mit Mikrokanalkühlelementen, Kühlanschlüssen (11), einer elektrischen Versorgung (10) der Laserdioden (12) und mit die Werkstückoberflächentemperatur erfassenden infrarotempfindlichen Dioden (6), wobei die Module (1), denen jeweils in Richtung der Laserstrahlung (7) eine Fokussieroptik (13) nachgeordnet ist, von der die Laserstrahlung (7) auf eine relativ zu den Modulen (1) bewegbare Werkstückoberfläche (14) fokussierbar ist, zueinander und in bezug auf die Werkstückoberfläche (14) derart angeordnet sind, daß die einzelnen, von jedem Modul (1) und der zugeordneten Fokussieroptik (13) erzeugten Foki der Laserstrahlung (7) auf der Werkstückoberfläche (14) überlagernd als ein einziger Fokus abbildbar sind und die Leistungsverteilung auf der Werkstückoberfläche (14) bei Ab- oder Zuschaltung einzelner Diodenstacks (20) konstant haltbar sowie lediglich die Gesamtleistung verringerbar bzw. erhöhbar ist, und wobei die infrarotempfindlichen Dioden (6) in einem Detektor enthalten sind, der über einen Komparator (16) und einen Regler (18) mit der elektrischen Versorgung (10) der Laserdioden (12) verbunden ist,
**dadurch gekennzeichnet,**
**daß** die Foki als Linienfoki (15) ausgebildet sind, und daß an einem in bezug auf die Werkstückoberfläche (14) senkrecht angeordneten Modul (1) eine Detektorzeile (5) derart vorgesehen ist, daß die von der Werkstückoberfläche (14) ausgehende Wärmestrahlung (9) über die dem Modul (1) vorgeschaltete Fokussieroptik (13) auf die Detektorzeile (5) führbar ist.

4. Anordnung zur temperaturgeregelten Oberflächenbehandlung, insbesondere zum Härten von Werkstückoberflächen mittels Laserstrahlung, mit Modulen (1) aus zu Stacks (20) gestapelten Laserdiodenbarren (3) mit Mikrokanalkühlelementen, Kühlanschlüssen (11), einer elektrischen Versorgung (10) der Laserdioden (12) und mit die Werkstückoberflächentemperatur erfassenden infrarotempfindlichen Dioden (6), wobei die Module (1), denen jeweils in Richtung der Laserstrahlung (7) eine Fokussieroptik (13) nachgeordnet ist, von der die Laserstrahlung (7) auf eine relativ zu den Modulen (1) bewegbare Werkstückoberfläche fokussierbar ist, in bezug auf letztere derart angeordnet sind, daß die Diodenstacks (20) der einzelnen Module (1) als nebeneinanderliegende und/oder sich überlappende Foki auf der Werkstückoberfläche (14) abbildbar sind und die Leistungsverteilung durch Ab- bzw. Zuschalten bzw. Regeln einzelner Diodenbarren (3) und/oder Diodenstacks (20) der Module (1) änderbar ist, und wobei die infrarotempfindlichen Dioden (6) in einem Detektor enthalten sind, der über einen Komparator (16) und einen Regler (18) mit der elektrischen Versorgung (10) der Laserdioden (12) verbunden ist,
**dadurch gekennzeichnet,**
**daß** die Foki als Linienfoki (15) ausgebildet sind, und daß an einem in bezug auf die Werkstückoberfläche (14) senkrecht angeordneten Modul (1) eine Detektorzeile (5) derart vorgesehen ist, daß die von der Werkstückoberfläche (14) ausgehende Wärmestrahlung (9) über die dem Modul (1) vorgeschaltete Fokussieroptik (13) auf die Detektorzeile (5) führbar ist.

5. Anordnung nach Anspruch 3 oder 4, **dadurch gekennzeichnet, daß** die Detektorzeile (5) Silizium-Detektoren aufweist.

6. Anordnung nach Anspruch 3 bis 5, **dadurch gekennzeichnet, daß** fünf Moddule (1) mit je 250 W Einzelleistung vorgesehen sind.

7. Anordnung nach Anspruch 3 bis 6, **dadurch gekennzeichnet, daß** ihr Bauraum ca. 100 x 100 x 150 mm (Breite x Höhe x Tiefe) und ihr Gewicht ohne Netzversorgung ca. 2 kg betragen.

## Claims

1. Method for surface treatment with temperature control, particularly for superficial hardening of workpiece surfaces with laser radiation produced by laser diodes arranged side by side to form bars which are stapled one on top of the other forming stacks which for their part form a multitude of modules, whereby the laser radiation, produced by the diode lasers, monitors the temperature on the workpiece surface by means of a focussing optics, arranged behind the module in the direction of the laser radiation, with infrared-sensitive diodes and the intensity distribution of the laser radiation on the workpiece surface is adapted to a desired temperature profile whereby a performance addition takes place through the superposition of individual foci of the diode stacks on the workpiece surface by the imaging of the diode stacks as one focus on the workpiece surface and whereby the performance distribution is maintained when individual diode stacks are disconnected or connected and merely the overall performance decreases or increases, the heat radiation of the workpiece surface is simultaneously supplied via the focussing optics to the infrared-sensitive diodes for the constant recording of the temperature distribution on the workpiece surface, and the adaptation of the intensity distribution of the laser radiation on the workpiece surface to the desired temperature profile is brought about through control and/or the disconnection or connection of individual laser diodes and/or diode bars,
**characterised thereby**
that the stacks are imaged as line foci and that at one module, which is vertically arranged with regard to the workpiece surface, a detector line is provided in such a manner that the heat radiating from the workpiece surface is led via the focussing optics, placed before the module, onto the detector line.

2. Method for surface treatment with temperature control, particularly for superficial hardening of workpiece surfaces with laser radiation produced by laser diodes arranged side by side to form bars which are stapled one on top of the other forming stacks which for their part form a multitude of modules, whereby the laser radiation, produced by the diode lasers, monitors the temperature on the workpiece surface by means of a focussing optics, arranged behind the module in the direction of the laser radiation, with infrared-sensitive diodes and the intensity distribution of the laser radiation on the workpiece surface is adapted to a desired temperature profile whereby a performance addition takes place through the combining of individual foci of the diode stacks on the workpiece surface by the imaging of the diode stacks as foci lying side by side and/or superimposing one another on the workpiece surface, the heat radiation of the workpiece surface is simultaneously supplied via the focussing optics to the infrared-sensitive diodes for the constant recording of the temperature distribution on the workpiece surface, and the adaptation of the intensity distribution of the laser radiation on the workpiece surface to the desired temperature profile is brought about through control and/or the disconnection or connection of individual diode bars and/or diode stacks,
**characterised thereby**
that the diode stacks are imaged as line foci which are arranged in a line and that at one module, which is vertically arranged with regard to the workpiece surface, a detector line is provided in such a manner that the heat radiating from the workpiece surface is led via the focussing optics, placed before the module, onto the detector line.

3. Arrangement for surface treatment with temperature control, particularly for superficial hardening with laser radiation, with modules (1) of laser diode bars (3) - stapled to form stacks (20) - with micro-channel cooling elements, cooling connections (11), an electrical supply (10) of the laser diodes (12) and with infrared-sensitive diodes (6) which register the workpiece surface temperature, whereby the modules (1) behind each of which in the direction of the laser radiation (7), a focussing optics is arranged (13) from which the laser radiation (7) can be focussed onto a workpiece surface (14) which is relatively movable towards the modules (1), are arranged in such a manner to one another and with regard to the workpiece surface (14) that the individual laser radiation (7) foci produced by every module (1) and the allocated focussing optics (13) can be imaged lying upon another on the workpiece surface (14) as one single focus and the performance distribution on the workpiece surface (14) can be constantly maintained when individual diode stacks (20) are disconnected or connected and merely the overall performance can be decreased or increased and whereby the infrared-sensitive diodes (6) are within a detector that is connected via a comparator (16) and a controller (18) with the electrical supply (10) of the laser diodes (12)
**characterised thereby**
that the foci are line foci (15) and that at one module (1), which is vertically arranged with regard to the workpiece surface (14), a detector line (5) is provided in such a manner that the heat (9) radiating from the workpiece surface (14) can be led via the focussing optics (13), placed before the module (1), onto the detector line (5).

4. Arrangement for surface treatment with temperature control, particularly for superficial hardening with laser radiation, with modules (1) of laser diode bars (3) - stapled to form stacks (20) - with micro-channel cooling elements, cooling connections (11), an electrical supply (10) of the laser diodes (12) and with infrared-sensitive diodes (6) which register the workpiece surface temperature, whereby the modules (1), behind each of which in the direction of the laser radiation (7) a focussing optics is arranged (13) from which the laser radiation (7) can be focussed onto a workpiece surface (14) which is relatively movable towards the modules (1), are arranged in such a manner with regard to the workpiece surface (14) that the diode stacks (20) of the individual modules (1) can be imaged as foci lying side by side and/or lying upon another on the workpiece surface (14) and the performance distribution can be changed by disconnecting or connecting individual diode bars (3) and/or diode stacks (2) of the modules and whereby the infrared-sensitive diodes (6) are within a detector that is connected via a comparator (16) and a controller (18) with the electrical supply (10) of the laser diodes (12)
**characterised thereby**
that the foci are line foci (15) and that at one module (1), which is vertically arranged with regard to the workpiece surface (14), a detector line (5) is provided in such a manner that the heat (9) radiating from the workpiece surface (14) can be led via the focussing optics (13), placed before the module (1), onto the detector line (5).

5. Arrangement according to claims 3 or 4 **characterised thereby** that the detector line (5) has silicium detectors.

6. Arrangement according to claims 3 to 5 **characterised thereby** that five modules (1) with 250 W individual performance each are provided.

7. Arrangement according to claims 3 to 6 **characterised thereby** that its building volume is about 100 x 100 x 150 mm (width x height x depth) and that its weight without network supply is about 2 kilos.

## Revendications

1. Procédé pour traitement de surface avec contrôle de la température, en particulier pour le durcissement superficiel de pièces au moyen d'un rayonnement laser produit par des diodes laser disposées en parallèle en lingots qui de leur part sont empilés en piles formant une multitude de modules, le rayonnement laser produit par les diodes laser contrôlant moyennant une optique de focalisation disposée derrière le module en direction du rayonnement laser et focalisée sur la surface de la pièce la température sur la surface de la pièce à l'aide de diodes sensibles à l'infrarouge et la distribution d'intensité du rayonnement laser sur la surface de la pièce étant adaptée à un profil de température souhaité tout en réalisant une addition de puissance par superposition de différents points focaux des piles de diodes en représentant les piles de diodes comme un point focal sur la surface de la pièce et la distribution de puissance lors de la coupure ou de la connexion de différentes piles de diodes étant maintenue et seulement la puissance totale étant diminuée ou augmentée, le rayonnement thermique de la surface de la pièce étant simultanément apporté par-dessus l'optique de focalisation aux diodes sensibles à l'infrarouge en vue de saisir en continu la distribution de température sur la surface de la pièce et en adaptant la distribution d'intensité du rayonnement laser sur la surface de la pièce au profil de température souhaité en réglant et/ou en coupant ou connectant de différentes diodes laser et/ou des lingots de diodes
**caractérisé par le fait**
**que** les piles sont représentées comme points focaux linéaires et que sur un module disposé verticalement par rapport à la surface de la pièce est prévue une ligne de détecteur de sorte que le rayonnement thermique émanant de la surface de la pièce est amené à la ligne de détecteur par-dessus l'optique de focalisation placée en amont du module.

2. Procédé pour traitement de surface avec contrôle de la température, en particulier pour le durcissement superficiel de pièces au moyen d'un rayonnement laser produit par des diodes laser disposées en parallèle en lingots qui de leur part sont empilés en piles formant une multitude de modules, le rayonnement laser produit par les diodes laser contrôlant moyennant une optique de focalisation disposée derrière le module en direction du rayonnement laser et focalisée sur la surface de la pièce la température sur la surface de la pièce à l'aide de diodes sensibles à l'infrarouge et la distribution d'intensité du rayonnement laser sur la surface de la pièce étant adaptée à un profil de température souhaité tout en réalisant une addition de puissance par combinaison de différents points focaux des piles de diodes sur la surface de la pièce en représentant les piles de diodes sur la surface de la pièce comme points focaux adjacents et/ou se recouvrant, le rayonnement thermique de la surface de la pièce étant simultanément apporté par-dessus l'optique de focalisation aux diodes sensibles à l'infrarouge en vue de saisir en continu la distribution de température sur la surface de la pièce et en adaptant la distribution d'intensité du rayonnement laser sur la surface de la pièce au profil de température souhaité en réglant et/ou en coupant ou connectant de différents lingots de diodes et/ou piles de diodes
**caractérisé par le fait**
**que** les piles de diodes sont représentées comme points focaux linéaires disposés en une ligne et que sur un module disposé verticalement par rapport à la surface de la pièce est prévue une ligne de détecteur de sorte que le rayonnement thermique émanant de la surface de la pièce est amené à la ligne de détecteur par-dessus l'optique de focalisation placée en amont du module.

3. Dispositif pour traitement de surface avec contrôle de la température, en particulier pour le durcissement superficiel de pièces au moyen d'un rayonnement laser avec modules (1) en lingots de diodes laser (3) empilés en piles (20) avec éléments réfrigérants à microcanal, connexions de réfrigération (11), une alimentation électrique (10) des diodes laser (12) et avec diodes (6) sensibles à l'infrarouge saisissant la température de la surface de la pièce, les modules (1) en aval desquels est placée une optique de focalisation (13) en direction du rayonnement laser (7) permettant à focaliser le rayonnement laser (7) sur une surface de la pièce (14) mobile par rapport aux modules (1) étant disposés les uns par rapport aux autres et par rapport à la surface de la pièce (14) de manière que les différents points focaux du rayonnement laser produits par chaque module (1) et par l'optique de focalisation conjuguée (13) peuvent être représentés sur la surface de la pièce (14) comme un seul point focal en superposition et la distribution de puissance sur la surface de la pièce (14) peut être maintenue lors de la coupure ou de la connexion de différentes piles de diodes (20) ainsi que seule la puissance totale peut être réduite ou augmentée, les diodes (6) sensibles à l'infrarouge étant comprises dans un détecteur relié à l'alimentation électrique (10) des diodes laser (12) par l'intermédiaire d'un comparateur (16) et d'un régulateur (18)
**caractérisé par le fait**
**que** les points focaux sont configurés comme points focaux linéaires (15) et que sur un module (1) disposé verticalement par rapport à la surface de la pièce (14) est prévue une ligne de détecteur (5) de sorte que le rayonnement thermique (9) émanant de la surface de la pièce (14) peut être amené à la ligne de détecteur (5) par-dessus l'optique de focalisation (13) placée en amont du module (1).

4. Dispositif pour traitement de surface avec contrôle de la température, en particulier pour le durcissement superficiel de pièces au moyen d'un rayonnement laser avec modules (1) en lingots de diodes laser (3) empilés en piles (20) avec éléments réfrigérants à microcanal, connexions de réfrigération (11), une alimentation électrique (10) des diodes laser (12) et avec diodes (6) sensibles à l'infrarouge saisissant la température de la surface de la pièce, les modules (1) en aval desquels est placée une optique de focalisation (13) en direction du rayonnement laser (7) permettant à focaliser le rayonnement laser (7) sur une surface de la pièce (14) mobile par rapport aux modules (1) étant disposés par rapport à ces derniers de sorte que les piles de diodes (20) des différents modules (1) peuvent être représentées sur la surface de la pièce (14) comme points focaux adjacents et/ou se recouvrant et la distribution de puissance peut être modifiée en coupant ou en connectant ou réglant de différents lingots de diodes (3) et/ou piles de diodes (20) des modules (1), et les diodes (6) sensibles à l'infrarouge étant comprises dans un détecteur relié à lalimentation eélctrique (10) des diodes laser (12) par l'intermédiaire d'un comparateur (16) et d'un régulateur (18),
**caractérisé par le fait**
**que** les points focaux sont configurés comme points focaux linéaires (15) et que sur un module (1) disposé verticalement par rapport à la surface de la pièce (14) est prévue une ligne de détecteur (5) de sorte que le rayonnement thermique (9) émanant de la surface de la pièce (14) peut être amené à la ligne de détecteur (5) par-dessus l'optique de focalisation (13) placée en amont du module (1).

5. Dispositif suivant revendication 3 ou 4, **caractérisé par le fait que** la ligne de détecteur (5) présente des détecteurs au silicium.

6. Dispositif suivant revendications 3 à 5, **caractérisé par le fait que** cinq modules (1) avec une puissance individuelle de 250 W chacun sont prévus.

7. Dispositif suivant revendications 3 à 6, **caractérisé par le fait que** leur volume de construction est d'env. 100 x 100 x 150 mm (largeur x hauteur x profondeur) et que leur poids sans alimentation est d'env. 2 kg.
